# EUROPEAN PATENT APPLICATION

(11) **EP 4 068 911 A1**
(43) Date of publication of application: **05.10.2022**
(21) Application number: 21166521.1
(22) Date of filing: 01.04.2021
(51) Int. Cl.: H05B 47/18, H04L 12/40, H04L 12/24, H04L 29/08, H04L 12/44

(54) **ASSOCIATING TOPOLOGICALLY RELATED DEVICES ON A LIGHTING CONTROL BUS**

(71) Applicant: Zumtobel Lighting GmbH, 6850 Dornbirn (AT); Tridonic GmbH & Co. KG, 6851 Dornbirn (AT)
(72) Inventor: Künzli, Markus, 6850 Dornbirn (AT); Lorenz, Stefan, 6850 Dornbirn (AT); Amann, Günter, 6850 Dornbirn (AT); Wohlgenannt, Rochus, 6850 Dornbirn (AT)
(74) Representative: Rupp, Christian

(57) **Abstract**

Disclosed is a method (1) of associating a plurality of topologically related devices (6) on a lighting control bus (4). The method (1) comprises: identifying (101) a disconnectable continuous substructure (5) of the lighting control bus (4) strictly by communication on the lighting control bus (4); and identifying (102) the plurality of topologically related devices (6) on the disconnectable continuous substructure (5) of the lighting control bus (4). This simplifies a commissioning of lighting systems.

## Description

### Technical Field

The present disclosure generally relates to lighting technology, and in particular to a method of associating a plurality of topologically related devices on a lighting control bus, a corresponding device, and a system configured to execute the method.

### Background Art

A lighting system typically comprises light sources (integrated into luminaires) and control devices, which allow the lighting to behave according to rules, external inputs and user preferences. The light sources and control devices are normally connected by a control system, such as a digital addressable lighting interface (DALI) bus and an attached lighting management entity (LME).

In a DALI-based control system, the LME assigns abstract "addresses" to every device, which are random, and do not provide any clue on the device's absolute position or its position relative to other devices. Especially, a luminaire including more than one device (e.g. an LED control gear and an occupancy sensor) does not get addresses for its devices which give any idea of the common location.

Yet for a useful illumination it is necessary that the LME is aware of the positions of the luminaires and other control devices, such as ambient light sensors or switches for user interaction. The procedure of learning the physical position or location of the devices is called "localisation", and is normally done by service technicians during the setup of the lighting system, called "commissioning".

The procedure of learning that devices (such as all devices of a given luminaire) have a similar physical position or location is called "association", and also has to be done during commissioning.

Devices such as LED control gear may reveal their position by modulating a light output of the hosting luminaire in response to a DALI identify command sent by the LME to the address of the given device. Devices may also be capable of activating a signaling unit, such as a buzzer or an indicator light in the hosting luminaire in response to the DALI identify command sent by the LME. Furthermore, devices may also announce their triggering to the LME, if they are sensitive to a certain external action, such as an infrared remote input, or a motion sensor. Individual and unambiguous triggering by the commissioner can be used to localize the device in the installation.

These known solutions are unsatisfactory, as
- localisation of devices requires the commissioner to pay attention,
- triggering devices for localisation requires an activity by the commissioner,
- devices without any outside access cannot be localized by giving feedback or detecting remote stimuli, and
- after a first pass of localisation of luminaires, a second pass of association is needed for devices within the luminaires, as these have no address correlations with the luminaire's control gear addresses.

### Summary

The object of the present disclosure is to provide methods, devices and systems being capable of associating a plurality of topologically related devices on a lighting control bus and thus overcome the indicated disadvantages of the prior art.

The invention is defined by the appended independent claims. Preferred embodiments are set forth in the dependent claims and in the following description and drawings.

A first aspect of the present disclosure relates to a method of associating a plurality of topologically related devices on a lighting control bus. The method comprises: identifying a disconnectable continuous substructure of the lighting control bus strictly by communication on the lighting control bus; and identifying the plurality of topologically related devices on the disconnectable continuous substructure of the lighting control bus.

The method may further comprise storing one or more of: a respective identifier of each of the plurality of topologically related devices; and a type, state, condition, parameter setting or a dedicated memory entry of the respective topologically related device.

The parameter setting may comprise a dedicated signature, or a memory setting, or an entry dedicated for localization or association, such as a string comprising a descriptor, a coordinate, a group name, an association group and /or a position name.

The respective identifier may comprise: a Global Trade Item Number of the respective topologically related device, an address of the respective topologically related device on the lighting control bus, or a hash value of a unique identifier of the respective topologically related device.

Each one of the lighting control bus and the disconnectable continuous substructure of the lighting control bus may be in conformity with the Digital Addressable Lighting Interface standards.

The identifying the disconnectable continuous substructure of the lighting control bus strictly by communication on the lighting control bus may comprise sending a trigger; and receiving the trigger at a transition to the disconnectable continuous substructure of the lighting control bus. The identifying the plurality of topologically related devices on the disconnectable continuous substructure of the lighting control bus may comprise, responsive to receiving the trigger, topologically relating those of the plurality of devices in the substructure that are communicatively responsive.

The identifying the disconnectable continuous substructure of the lighting control bus strictly by communication on the lighting control bus may comprise sending a trigger; receiving the trigger at a transition to the disconnectable continuous substructure of the lighting control bus; and identifying the plurality of devices on the lighting control bus that is communicatively responsive. The identifying the plurality of topologically related devices on the disconnectable continuous substructure of the lighting control bus may comprise, responsive to receiving the trigger and while identifying the plurality of devices on the lighting control bus that is communicatively responsive, topologically relating those of the plurality of devices that draw a current from the substructure of the lighting control bus in excess of a predetermined current threshold.

The identifying the disconnectable continuous substructure of the lighting control bus strictly by communication on the lighting control bus may comprise sending a trigger; receiving the trigger at a transition to the disconnectable continuous substructure of the lighting control bus; and identifying the plurality of devices on the lighting control bus that is communicatively responsive. The identifying the plurality of topologically related devices on the disconnectable continuous substructure of the lighting control bus may comprise, responsive to receiving the trigger and while identifying the plurality of devices on the lighting control bus that is communicatively responsive, topologically relating those of the plurality of devices that drop a voltage on the disconnectable continuous substructure to a low voltage state, wherein a magnitude of the drop of the voltage is indicative of a proximity of the respective topologically related device to the transition to the substructure.

The identifying the disconnectable continuous substructure of the lighting control bus strictly by communication on the lighting control bus may comprise identifying the plurality of devices on the lighting control bus that is communicatively responsive; sending a trigger and receiving the trigger at a transition to the disconnectable continuous substructure of the lighting control bus. The identifying the plurality of topologically related devices on the disconnectable continuous substructure of the lighting control bus may comprise, responsive to receiving the trigger, disconnecting the disconnectable continuous substructure from the lighting control bus; and topologically relating those of the plurality of devices that are no longer responsive.

The identifying the disconnectable continuous substructure of the lighting control bus strictly by communication on the lighting control bus may comprise: setting each of the plurality of devices on the lighting control bus into a normal operation state of the lighting control bus; sending a trigger; and receiving the trigger at a transition to the disconnectable continuous substructure of the lighting control bus. The identifying the plurality of topologically related devices on the disconnectable continuous substructure of the lighting control bus may comprise, responsive to receiving the trigger, disconnecting the disconnectable continuous substructure from the lighting control bus for a predetermined time span; and responsive to a lapse of the predetermined time span, topologically relating those of the plurality of devices that are in a failure state of the lighting control bus.

The identifying the disconnectable continuous substructure of the lighting control bus strictly by communication on the lighting control bus may comprise: setting each of the plurality of devices on the lighting control bus to a first dim level for the normal operation state of the lighting control bus and to a second dim level different from the first dim level for the failure state of the lighting control bus; sending a trigger; and receiving the trigger at a transition to the disconnectable continuous substructure of the lighting control bus. The identifying the plurality of topologically related devices on the disconnectable continuous substructure of the lighting control bus may comprise, responsive to receiving the trigger, disconnecting the disconnectable continuous substructure from the lighting control bus for the predetermined time span; and responsive to the lapse of the predetermined time span, topologically relating those of the plurality of devices that operate at the second dim level.

A second aspect of the present disclosure relates to a device for associating a plurality of topologically related devices on a lighting control bus. The device comprises: a first port connectable to a lighting control bus; a second port connectable to a disconnectable continuous substructure of the lighting control bus; and a communication unit. The communication unit is configured to receive a trigger, via the first port, for identifying the disconnectable continuous substructure of the lighting control bus strictly by communication on the lighting control bus. The communication unit is further configured to identify, responsive to the trigger and via the second port, the plurality of topologically related devices on the disconnectable continuous substructure of the lighting control bus.

The communication unit may further be configured to disconnect the disconnectable continuous substructure connectable to the second port from the lighting control bus connectable to the first port.

The device may further comprise a current sensing unit configured to sense a magnitude of a current drawn from the disconnectable continuous substructure of the lighting control bus.

The device may further comprise a voltage sensing unit configured to sense a magnitude of a voltage drop on the disconnectable continuous substructure of the lighting control bus; and/or a further voltage sensing unit configured to sense a voltage drop on the first port.

In particular, voltage sensing unit and the further voltage sensing unit can be configured to sense the voltage drops on the first port, i.e. the non-disconnectable side, and on the second port, i.e. the disconnectable side, with and without connection of the disconnectable continuous substructure.

The voltage sensing unit and the further voltage sensing unit can be independent sensing units, or they can both be components of a common voltage sensing arrangement of the device.

A third aspect of the present disclosure relates to a system for associating a plurality of topologically related devices on a lighting control bus. The system comprises: a device of the second aspect or any of its embodiments, arranged at a transition to a disconnectable continuous substructure of the lighting control bus; and a lighting management entity, LME, configured to send a trigger to the device. The LME and the device are interconnected by the lighting control bus. The device is connected to the disconnectable continuous substructure of the lighting control bus. The system is configured to execute the method of the first aspect or any of its implementations.

### Advantageous Effects

The claimed subject-matter helps in localisation and association of DALI devices by
- reducing commissioning steps for devices which have no direct outside access,
- reducing localisation effort, as only luminaires need to be localized manually, and included devices may be associated without another localisation step;
- reducing the commissioner's manual effort in localisation and association, as some steps may be performed automatically,
- enabling automated association by the LME, without commissioner interaction, and
- allowing automatic creation of a map of nearby DALI devices, enabling intelligent grouping of devices, and
- low cost of hardware implementation.

Reducing commissioning steps for devices, which have no direct outside access, is particularly advantageous for luminaries. Especially when the luminaires are mounted in a kind of order (array), their order and clustering can be detected by this method. Localization can be much easier if only clusters have to be assigned to address spaces.

For example, the claimed subject-matter may be applied in luminaires with more than one device able to communicate, or in trunking systems, where a relation of devices in one dimension helps in commissioning, or in lighting systems comprising devices that are unable to communicate by themselves, like RF sensor devices, for example.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a method 1 in accordance with the present disclosure of associating a plurality of topologically related devices on a lighting control bus;
- FIG. 2: illustrates a device and system in accordance with the present disclosure for associating a plurality of topologically related devices on a lighting control bus; and
- FIGS. 3 - 8: illustrate embodiments of the method of FIG. 1.

### Detailed Descriptions of Drawings

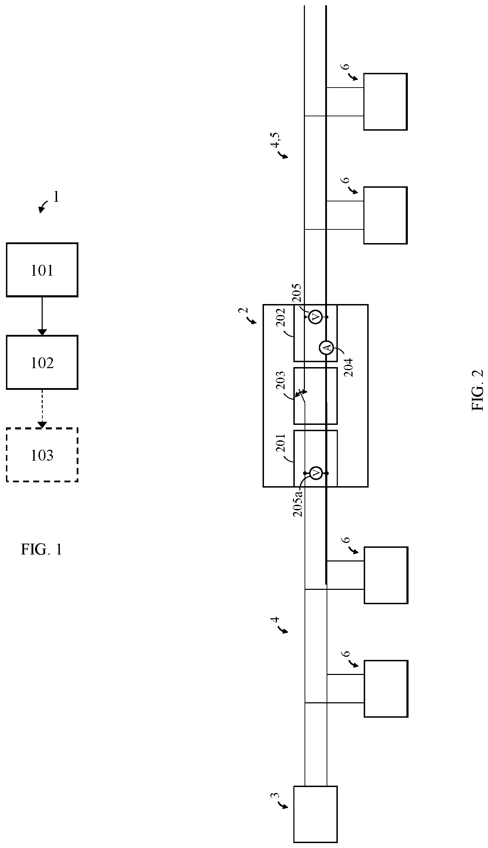

FIG. 1 illustrates a method 1 in accordance with the present disclosure of associating a plurality of topologically related devices 6 on a lighting control bus 4.

As used herein, a topological relation of devices may refer to a relation between the devices in view of their topological arrangement with respect to one other. For example, devices may be arranged next to each other, arranged nearby to each other, arranged into a larger logical cluster (such as a plurality of devices arranged in a same room) or arranged in a certain direction to each other. The procedure of finding devices having a topological relation may be called "topologically relating" these devices.

The method 1 comprises a step of identifying 101 a disconnectable continuous substructure 5 of the lighting control bus 4 strictly by communication on the lighting control bus 4.

As used herein, a disconnectable continuous substructure of a lighting control bus may refer to an extension ("substructure") of the lighting control bus comprising a plurality of devices of a lighting system, such as drivers, lighting modules, sensors, actuators and the like that are topologically related, such as arranged in a same building section, room, or luminaire. The plurality of devices may be disconnected from a bus communication on the lighting control bus as a whole ("disconnectable"), while still being able to participate in a bus communication on the disconnected substructure of the lighting control bus ("continuous").

For example, a lighting control bus comprising a plurality of parallel-connected devices generally forms a star topology. However, the star topology turns into a tree topology when the lighting control bus is cascaded into a number of disconnectable continuous substructures, wherein the disconnectable continuous substructures form the branches of the tree, and wherein a number of branches may extend from the respective branch point, which may be referred to as a transition to the disconnectable continuous substructure(s).

In other words, given a lighting control bus 4 having a tree topology including a number of branch points or transitions (or equivalently, a number of disconnectable continuous substructure(s) 5), a particular one of the disconnectable continuous substructure(s) 5 has/have to be pointed out. The plurality of topologically related devices 6 on the lighting control bus 4 will be associated with respect to the branch point or transition to this particular one of the disconnectable continuous substructure(s) 5, meaning that the plurality of devices 6 on the particular one of the disconnectable continuous substructure(s) 5 of the lighting control bus 4 may be recognized as being topologically related because they share a same fate upon disconnection from the tree structure of the lighting control bus 4. For example, the plurality of devices 6 on the disconnectable continuous substructure 5 may still be reachable via a bus communication on the disconnected substructure 5 of the lighting control bus 4, the plurality of devices 6 on the disconnectable continuous substructure 5 may experience a same bus communication timeout, and the like.

From this it follows that associating the topologically related devices 6 on the lighting control bus 4 as a whole requires carrying out the method 1 for each of the disconnectable continuous substructures 5 of the lighting control bus 4, for example according to a depth-first or breadth-first methodology.

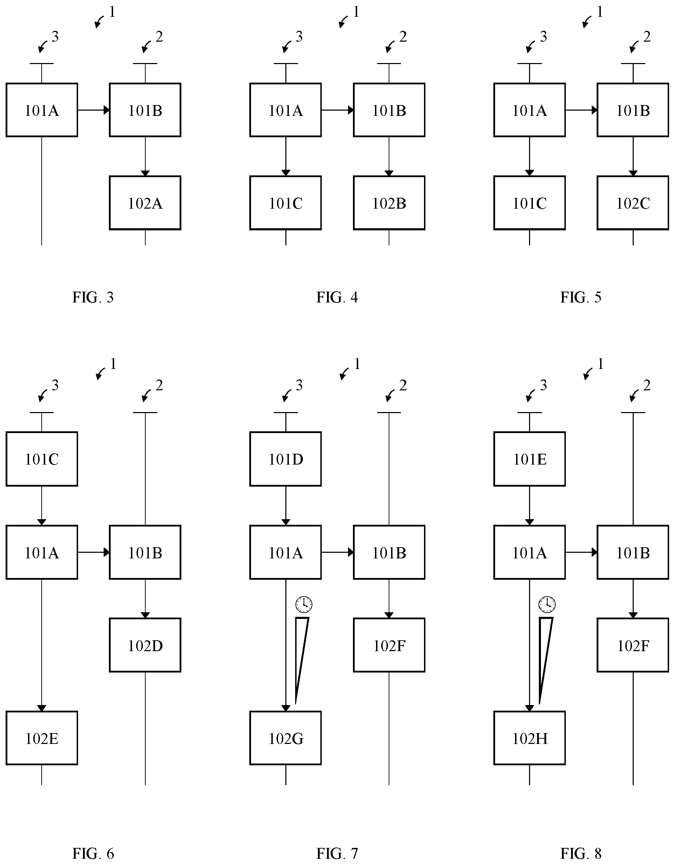

What unites the embodiments explained in connection with FIGS. 3 - 8 below is that the step of identifying 101 the disconnectable continuous substructure 5 is strictly achieved by manipulation of a connectivity of the topologically related devices 6 to a bus communication on the lighting control bus 4, rather than by manipulation of a connectivity of said devices to an energy supply, for example.

Subsequent to the step of identifying 101 the disconnectable continuous substructure 5, the method 1 further comprises a step of identifying 102 the plurality of topologically related devices 6 on this disconnectable continuous substructure 5.

To continue the above example, upon disconnection of the particular one of the disconnectable continuous substructure(s) 5 from the lighting control bus 4, it is determined if the devices 6 on the disconnectable continuous substructure 5 actually share the same fate, are thus topologically related and should therefore be associated with one another.

The method 1 may further comprise a step of storing 103 one or more of: a respective identifier of each of the plurality of topologically related devices 6; and a type, state, condition or parameter setting of the respective topologically related device 6.

That is to say, an association of the devices 6 on the particular one of the disconnectable continuous substructure(s) 5 that actually share the same fate upon disconnection from the lighting control bus 4 may be recorded as a list of respective device identifiers, and the list may optionally include further state information of the respective device 6.

For example, the respective identifier may comprise: a Global Trade Item Number GTIN of the respective topologically related device 6, an address of the respective topologically related device 6 on the lighting control bus 4, or a hash value of a unique identifier of the respective topologically related device 6.

Based on the of respective device identifiers, the associated topologically related devices 6 may be grouped together in view of the addressing on the lighting control bus 4.

FIG. 2 illustrates a device 2 and system 2, 3 in accordance with the present disclosure for associating a plurality of topologically related devices 6 on a lighting control bus 4.

The system 2, 3 comprises the device 2 arranged in the center of FIG. 2 and a lighting management entity (LME) 3 arranged to the left of the device 2.

The LME 3 denotes a root of a tree structure of the lighting control bus 4.

The LME 3 and the device 2 are interconnected by the lighting control bus 4 indicated to the left of device 2. The device 2 is connected to the disconnectable continuous substructure 5 of the lighting control bus 4 indicated to the right of device 2. As such, the device 2 is arranged at a branch point or transition to the disconnectable continuous substructure 5 of the lighting control bus 4. In particular, more than one disconnectable continuous substructure 5 may branch off such a branch point or transition.

Each one of the lighting control bus 4 and the disconnectable continuous substructure 5 of the lighting control bus 4 may be in conformity with the DALI standards.

The device 2 comprises a first port 201, a second port 202 and a communication unit 203.

The first port 201 is connectable to the tree structure of the lighting control bus 4, which may comprise a (first) plurality of topologically related devices 6 of a lighting system 2, 3, wherein the topological relation results from the fact that these devices 6 are arranged on one side of the device 2, before a transition to the disconnectable continuous substructure 5.

The second port 202 is connectable to the mentioned disconnectable continuous substructure 5 of the lighting control bus 4, which comprises a (second) plurality of topologically related devices 6 of the lighting system 2, 3, wherein the topological relation in this case comes about through arrangement of these devices 6 on another side of the device 2, beyond the transition to the disconnectable continuous substructure 5. If more than one disconnectable continuous substructure 5 branches off at the branch point or transition denoted by the device 2, said device 2 comprises a plurality of second ports 202 connectable to the multiple disconnectable continuous substructures 5.

The LME 3 is configured to send a trigger to the device 2.

The trigger may comprise sending a message to a particular unicast address to which the device 2 responds exclusively. Alternatively, the trigger may comprise sending a first message to a broadcast or multicast address to which a number of devices 2 may respond, and further comprise a second message to a particular one of the number of responding devices 2 in accordance with a selection methodology, such as a first-come, first-served basis or the like.

The communication unit 203 indicated in FIG. 2 between the first port 201 and the second port 202 is configured to receive the trigger from the LME 3, via the first port 201, for identifying the disconnectable continuous substructure 5 of the lighting control bus 4 strictly by communication on the lighting control bus 4.

The communication unit 203 may further be configured to disconnect the disconnectable continuous substructure 5 connectable to the second port 202 from the lighting control bus 4 connectable to the first port 201. In FIG. 2, this is indicated by the switch symbol in the communication unit 203. The disconnection may interrupt at least one of the conductors of the lighting control bus 4, and allows for separate communication in both directions, i.e., to the tree structure of the lighting control bus 4 on the one hand and the extension of the tree structure of the lighting control bus 4 represented by the disconnected continuous substructure 5 on the other hand. As those skilled in the art will appreciate, direct electrically connected through wiring as just described is known to reduce electrical connection complexity in lighting control buses.

If more than one disconnectable continuous substructure 5 branches off at the branch point or transition denoted by the device 2, said communication unit 203 may be further configured to disconnect more than one disconnectable continuous substructure 5 from the lighting control bus 4 in accordance with a trigger by the LME 3 that distinguishes between disconnectable continuous substructures 5.

The communication unit 203 may further be configured to identify, responsive to the trigger and via the second port 202, the plurality of topologically related devices 6 on the disconnectable continuous substructure 5 of the lighting control bus 4.

The device 2 may further comprise a current sensing unit 204 configured to sense a magnitude of a current drawn from the disconnectable continuous substructure 5 of the lighting control bus 4. In FIG. 2, the current sensing unit 204 is indicated by a circle identified as "A" looped into a "low side" conductor of the disconnectable continuous substructure 5 of the lighting control bus 4. Those skilled in the art will appreciate that equivalent arrangements are possible as well, such as in a "high side" conductor, and that the current sensing unit 204 may be implemented in various ways, such as by sensing a voltage dropping across a shunt resistor.

The device 2 may further comprise a voltage sensing unit 205 configured to sense a magnitude of a voltage drop on the disconnectable continuous substructure 5 of the lighting control bus 4. In FIG. 2, the voltage sensing unit 205 is indicated by a circle identified as "V" parallel-connected to the devices 6 between the "high side" and "low side" conductors of the disconnectable continuous substructure 5 of the lighting control bus 4. Those skilled in the art will appreciate that the current sensing unit 204 may be implemented in various ways, such as by direct sensing of a fraction of a voltage drop across a voltage divider, or by indirect sensing of a voltage by a measuring transformer.

The device 2 may comprise a further voltage sensing unit 205a configured to sense a voltage drop on the first port 201. The voltage sensing unit 205 and the further voltage sensing unit 205a can be used for measurements on the first and/or the second port 201, 202 depending on the disconnection status of the disconnectable continuous substructure 5.

In particular, the voltage sensing unit 205 and the further voltage sensing unit 205a can be two separate units, or they can be components of a common voltage sensing arrangement of the device 2.

The system 2, 3 is configured to execute the method 1 according to various implementations described in connection with FIG. 1 mentioned above and FIGS. 3 - 8 explained next.

FIGS. 3 - 8 illustrate embodiments of the method 1 of FIG. 1.

In accordance with a first embodiment shown in FIG. 3 that may be called "DALI readout", the step of identifying 101 the disconnectable continuous substructure 5 of the lighting control bus 4 strictly by communication on the lighting control bus 4 may comprise that the LME 3 sends 101A a trigger; and the device 2 receives 101B the trigger at a transition to the disconnectable continuous substructure 5 of the lighting control bus 4 where it is located.

With continued reference to the first embodiment, the step of identifying 102 the plurality of topologically related devices 6 on the disconnectable continuous substructure 5 of the lighting control bus 4 may comprise that the device 2, responsive to receiving 101B the trigger, topologically relates 102A those of the plurality of devices in the substructure 5 that are communicatively responsive.

In accordance with a second embodiment shown in FIG. 4 that may be called "DALI sniffing", the step of identifying 101 the disconnectable continuous substructure 5 of the lighting control bus 4 strictly by communication on the lighting control bus 4 may comprise that the LME 3 sends 101A the trigger; that the device 2 receives 101B the trigger at a transition to the disconnectable continuous substructure 5 of the lighting control bus 4; and that the LME 3 identifies 101C a plurality of devices 6 on the lighting control bus 4, including the plurality of devices 6 on the disconnectable continuous substructure 5, that is communicatively responsive.

With continued reference to the second embodiment, the step of identifying 102 the plurality of topologically related devices 6 on the disconnectable continuous substructure 5 of the lighting control bus 4 may comprise that the device 2, responsive to receiving 101B the trigger and while the LME 3 keeps on identifying 101C the plurality of devices on the lighting control bus 4 that is communicatively responsive, topologically relates 102B those of the plurality of devices that draw a current from the substructure of the lighting control bus 4 in excess of a predetermined current threshold.

In accordance with a third embodiment shown in FIG. 5 that may be called "DALI low voltage", the step of identifying 101 the disconnectable continuous substructure 5 of the lighting control bus 4 strictly by communication on the lighting control bus 4 may comprise that the LME 3 sends 101A a trigger; that the device 2 receives 101B the trigger at a transition to the disconnectable continuous substructure 5 of the lighting control bus 4; and that the LME 3 identifies 101C a plurality of devices on the lighting control bus 4, including the plurality of devices 6 on the disconnectable continuous substructure 5, that is communicatively responsive.

With continued reference to the third embodiment, the step of identifying 102 the plurality of topologically related devices 6 on the disconnectable continuous substructure 5 of the lighting control bus 4 may comprise that the device, responsive to receiving 101B the trigger and while the LME 3 keeps on identifying 101C the plurality of devices on the lighting control bus 4 that is communicatively responsive, topologically relates 102C those of the plurality of devices that drop a voltage on the disconnectable continuous substructure 5 to a low voltage state, whereas a magnitude of the drop of the voltage is indicative of a proximity of the respective topologically related device 6 to the transition to the substructure (i.e., the device 2).

In accordance with a fourth embodiment shown in FIG. 6 that may be called "vanishing from the DALI bus after DALI communication blackout", the step of identifying 101 the disconnectable continuous substructure 5 of the lighting control bus 4 strictly by communication on the lighting control bus 4 may comprise that the LME 3 identifies 101C a plurality of devices 6 on the lighting control bus 4, including the plurality of devices 6 on the disconnectable continuous substructure 5, that is communicatively responsive; that the LME 3 sends 101A a trigger; and that the device 2 receives 101B the trigger at a transition to the disconnectable continuous substructure 5 of the lighting control bus 4.

With continued reference to the fourth embodiment, the step of identifying 102 the plurality of topologically related devices 6 on the disconnectable continuous substructure 5 of the lighting control bus 4 may comprise that the device 2, responsive to receiving 101B the trigger, disconnects 102D the disconnectable continuous substructure 5 from the lighting control bus 4; and that the LME 3 topologically relates 102E those of the plurality of devices that are no longer responsive upon disconnection.

In accordance with a fifth embodiment shown in FIG. 7 that may be called "reading a system failure status after DALI communication blackout", the step of identifying 101 the disconnectable continuous substructure 5 of the lighting control bus 4 strictly by communication on the lighting control bus 4 may comprise that the LME 3 sets 101D each of the plurality of devices on the lighting control bus 4, including the plurality of devices 6 on the disconnectable continuous substructure 5, into a normal operation state of the lighting control bus 4; that the LME 3 sends 101A a trigger; and that the device 2 receives 101B the trigger at a transition to the disconnectable continuous substructure 5 of the lighting control bus 4.

With continued reference to the fifth embodiment, the step of identifying 102 the plurality of topologically related devices 6 on the disconnectable continuous substructure 5 of the lighting control bus 4 may comprise that the device 2, responsive to receiving 101B the trigger, disconnects 102F the disconnectable continuous substructure 5 from the lighting control bus 4 for a predetermined time span indicated by a clock symbol and a taper extending between steps 101A and 102G in FIG. 7; and that responsive to a lapse of the predetermined time span the LME 3 topologically relates 102G those of the plurality of devices that are in a failure state of the lighting control bus 4, owing to a timeout of the bus communication and a consistent transition to the failure state.

In accordance with a sixth embodiment shown in FIG. 8 that may be called "noting a system failure dim level after DALI communication blackout", the step of identifying 101 the disconnectable continuous substructure 5 of the lighting control bus 4 strictly by communication on the lighting control bus 4 may comprise that the LME 3 sets 101E each of the plurality of devices on the lighting control bus 4, including the plurality of devices 6 on the disconnectable continuous substructure 5, to a first dim level for the normal operation state of the lighting control bus 4 and to a second dim level different from the first dim level for the failure state of the lighting control bus 4; that the LME 3 sends 101A a trigger; and that the device 2 receives 101B the trigger at a transition to the disconnectable continuous substructure 5 of the lighting control bus 4.

With continued reference to the sixth embodiment, the step of identifying 102 the plurality of topologically related devices 6 on the disconnectable continuous substructure 5 of the lighting control bus 4 may comprise that the device 2, responsive to receiving 101B the trigger, disconnects 102F the disconnectable continuous substructure 5 from the lighting control bus 4 for the predetermined time span indicated by a clock symbol and a taper extending between steps 101A and 102H in FIG. 7; and that responsive to the lapse of the predetermined time span, the LME 3 topologically relates 102H those of the plurality of devices that operate at the second dim level, owing to a timeout of the bus communication and a consistent transition to the failure state.

Advantageously, the technical effects and advantages described above equally apply to the method of the first aspect and the system of the third aspect having corresponding features.

## Claims

1. A method (1) of associating a plurality of topologically related devices (6) on a lighting control bus (4), comprising
identifying (101) a disconnectable continuous substructure (5) of the lighting control bus (4) strictly by communication on the lighting control bus (4); and
identifying (102) the plurality of topologically related devices (6) on the disconnectable continuous substructure (5) of the lighting control bus (4).

2. The method (1) of claim 1, further comprising
storing (103) one or more of:
- a respective identifier of each of the plurality of topologically related devices (6); and
- a type, state, condition, parameter setting or dedicated memory entry of the respective topologically related device (6).

3. The method (1) of claim 2, wherein the respective identifier comprises
a Global Trade Item Number (GTIN) of the respective topologically related device (6), an address of the respective topologically related device (6) on the lighting control bus (4), or
a hash value of a unique identifier of the respective topologically related device (6).

4. The method (1) of any one of the claims 1 to 3, wherein each one of the lighting control bus (4) and the disconnectable continuous substructure (5) of the lighting control bus (4) is in conformity with the Digital Addressable Lighting Interface (DALI) standards.

5. The method (1) of any one of the claims 1 to 4,
wherein the identifying (101) the disconnectable continuous substructure (5) of the lighting control bus (4) strictly by communication on the lighting control bus (4) comprises
sending (101A) a trigger; and
receiving (101B) the trigger at a transition to the disconnectable continuous substructure (5) of the lighting control bus (4); and
wherein the identifying (102) the plurality of topologically related devices (6) on the disconnectable continuous substructure (5) of the lighting control bus (4) comprises
responsive to receiving (101B) the trigger, topologically relating (102A) those of the plurality of devices in the substructure that are communicatively responsive.

6. The method (1) of any one of the claims 1 to 4,
wherein the identifying (101) the disconnectable continuous substructure (5) of the lighting control bus (4) strictly by communication on the lighting control bus (4) comprises
sending (101A) a trigger;
receiving (101B) the trigger at a transition to the disconnectable continuous substructure (5) of the lighting control bus (4); and
identifying (101C) a plurality of devices on the lighting control bus (4) that is communicatively responsive; and
wherein the identifying (102) the plurality of topologically related devices (6) on the disconnectable continuous substructure (5) of the lighting control bus (4) comprises
responsive to receiving (101B) the trigger and while identifying (101C) the plurality of devices on the lighting control bus (4) that is communicatively responsive, topologically relating (102B) those of the plurality of devices that draw a current from the substructure of the lighting control bus (4) in excess of a predetermined current threshold.

7. The method (1) of any one of the claims 1 to 4,
wherein the identifying (101) the disconnectable continuous substructure (5) of the lighting control bus (4) strictly by communication on the lighting control bus (4) comprises
sending (101A) a trigger;
receiving (101B) the trigger at a transition to the disconnectable continuous substructure (5) of the lighting control bus (4); and
identifying (101C) a plurality of devices on the lighting control bus (4) that is communicatively responsive; and
wherein the identifying (102) the plurality of topologically related devices (6) on the disconnectable continuous substructure (5) of the lighting control bus (4) comprises
responsive to receiving (101B) the trigger and while identifying (101C) the plurality of devices on the lighting control bus (4) that is communicatively responsive, topologically relating (102C) those of the plurality of devices that drop a voltage on the disconnectable continuous substructure (5) to a low voltage state,
wherein a magnitude of the drop of the voltage is indicative of a proximity of the respective topologically related device to the transition to the substructure.

8. The method (1) of any one of the claims 1 to 4,
wherein the identifying (101) the disconnectable continuous substructure (5) of the lighting control bus (4) strictly by communication on the lighting control bus (4) comprises
identifying (101C) a plurality of devices on the lighting control bus (4) that is communicatively responsive; and
sending (101A) a trigger;
receiving (101B) the trigger at a transition to the disconnectable continuous substructure (5) of the lighting control bus (4); and
wherein the identifying (102) the plurality of topologically related devices (6) on the disconnectable continuous substructure (5) of the lighting control bus (4) comprises
responsive to receiving (101B) the trigger, disconnecting (102D) the disconnectable continuous substructure (5) from the lighting control bus (4); and
topologically relating (102E) those of the plurality of devices that are no longer responsive.

9. The method (1) of any one of the claims 1 to 4,
wherein the identifying (101) the disconnectable continuous substructure (5) of the lighting control bus (4) strictly by communication on the lighting control bus (4) comprises
setting (101D) each of the plurality of devices on the lighting control bus (4) into a normal operation state of the lighting control bus (4);
sending (101A) a trigger;
receiving (101B) the trigger at a transition to the disconnectable continuous substructure (5) of the lighting control bus (4); and
wherein the identifying (102) the plurality of topologically related devices (6) on the disconnectable continuous substructure (5) of the lighting control bus (4) comprises
responsive to receiving (101B) the trigger, disconnecting (102F) the disconnectable continuous substructure (5) from the lighting control bus (4) for a predetermined time span; and
responsive to a lapse of the predetermined time span, topologically relating (102G) those of the plurality of devices that are in a failure state of the lighting control bus (4).

10. The method (1) of any one of the claims 1 to 4,
wherein the identifying (101) the disconnectable continuous substructure (5) of the lighting control bus (4) strictly by communication on the lighting control bus (4) comprises
setting (101E) each of the plurality of devices on the lighting control bus (4) to a first dim level for the normal operation state of the lighting control bus (4) and to a second dim level different from the first dim level for the failure state of the lighting control bus (4); and
sending (101A) a trigger;
receiving (101B) the trigger at a transition to the disconnectable continuous substructure (5) of the lighting control bus (4); and
wherein the identifying (102) the plurality of topologically related devices (6) on the disconnectable continuous substructure (5) of the lighting control bus (4) comprises
responsive to receiving (101B) the trigger, disconnecting (102F) the disconnectable continuous substructure (5) from the lighting control bus (4) for the predetermined time span; and
responsive to the lapse of the predetermined time span, topologically relating (102H) those of the plurality of devices that operate at the second dim level.

11. A device (2) for associating a plurality of topologically related devices (6) on a lighting control bus (4), the device (2) comprising
a first port (201) connectable to a lighting control bus (4);
a second port (202) connectable to a disconnectable continuous substructure (5) of the lighting control bus (4); and
a communication unit (203) configured to
- receive a trigger, via the first port (201), for identifying the disconnectable continuous substructure (5) of the lighting control bus (4) strictly by communication on the lighting control bus (4); and
- identify, responsive to the trigger and via the second port (202), the plurality of topologically related devices (6) on the disconnectable continuous substructure (5) of the lighting control bus (4).

12. The device (2) of claim 11,
wherein the communication unit (203) is further configured to
- disconnect the disconnectable continuous substructure (5) connectable to the second port (202) from the lighting control bus (4) connectable to the first port (201).

13. The device of claim 11 or claim 12, further comprising
a current sensing unit (204) configured to sense a magnitude of a current drawn from the disconnectable continuous substructure (5) of the lighting control bus (4).

14. The device of claim 11 or claim 12, further comprising
a voltage sensing unit (205) configured to sense a magnitude of a voltage drop on the disconnectable continuous substructure (5) of the lighting control bus (4); and/or
a further voltage sensing unit (205a) configured to sense a magnitude of a voltage drop on the first port (201).

15. A system (2, 3) for associating a plurality of topologically related devices (6) on a lighting control bus (4), comprising
a device (2) of any one of the claims 11 to 14 arranged at a transition to a disconnectable continuous substructure (5) of the lighting control bus (4); and
a lighting management entity, LME (3), configured to send a trigger to the device (2);
wherein the LME (3) and the device (2) are interconnected by the lighting control bus (4);
wherein the device (2) is connected to the disconnectable continuous substructure (5) of the lighting control bus (4); and
wherein the system (2, 3) is configured to execute the method (1) of any one of the claims 1 to 10.
